# EUROPÄISCHE PATENTANMELDUNG

(11) **EP 4 350 971 A1**
(43) Veröffentlichungstag der Anmeldung: **10.04.2024**
(21) Anmeldenummer: 22200311.3
(22) Anmeldetag: 07.10.2022
(51) Int. Cl.: H02P 3/22, H02P 29/024, H02P 29/028, E05F 15/70

(54) **ELEKTROMECHANISCHER ANTRIEB ZUM BETÄTIGEN EINES BEWEGLICH AN EINEM STRUKTURELEMENT GELAGERTEN FLÜGELS**

(71) Anmelder: dormakaba Deutschland GmbH, 58256 Ennepetal (DE)
(72) Erfinder: Böse, Dennis, 58256 Ennepetal (DE)
(74) Vertreter: Balder IP Law, S.L.

(57) **Zusammenfassung**

Die Erfindung betrifft einen elektromechanischen Antrieb (1) zum Betätigen eines beweglich an einem Strukturelement gelagerten Flügels, insbesondere eines Türflügels oder eines Fensterflügels. Der elektromechanische Antrieb (1) weist einen Elektromotor (2) mit mindestens einer Phase auf, Ein Spannungsverlauf über diese Phase ist im Betrieb des Elektromotors (2) kontinuierlich. Eine Antriebswelle (3) des Elektromotors (2) steht über eine Kraftübertragungseinrichtung (4) mit dem Flügel in Wirkverbindung, wenn der elektromechanische Antrieb (1) bestimmungsgemäß an dem Flügel und/oder der Zarge montiert ist, so dass eine Bewegung der Antriebswelle (3) eine Bewegung des Flügels bewirkt. Der elektromechanische Antrieb (1) weist einen mechanischen Energiespeicher auf, welcher durch eine Öffnungsbewegung des Flügels aufgeladen und durch eine Schließbewegung des Flügels entladen wird, sodass die Schließbewegung durch die in dem mechanischen Energiespeicher gespeicherte Energie ausgelöst und/oder unterstützt wird. Der elektromechanische Antrieb (1) weist eine Notfallbremseinrichtung auf, durch welche die Bewegung des Flügels in einem für Notfälle geeigneten Betriebszustand bremsbar ist.

## Beschreibung

Die Erfindung betrifft einen elektromechanischen Antrieb zum Betätigen eines beweglich an einem Strukturelement gelagerten Flügels, insbesondere eines Türflügels oder eines Fensterflügels, wobei der elektromechanische Antrieb einen Elektromotor mit mindestens einer Phase aufweist, wobei ein Spannungsverlauf über diese Phase im Betrieb des Elektromotors kontinuierlich ist, wobei eine Antriebswelle des Elektromotors über eine Kraftübertragungseinrichtung mit dem Flügel in Wirkverbindung steht, wenn der elektromechanische Antrieb bestimmungsgemäß an dem Flügel und/oder der Zarge montiert ist, so dass eine Bewegung der Antriebswelle eine Bewegung des Flügels bewirkt, wobei der elektromechanische Antrieb einen mechanischen Energiespeicher aufweist, welcher durch eine Öffnungsbewegung des Flügels aufgeladen und durch eine Schließbewegung des Flügels entladen wird, sodass die Schließbewegung durch die in dem mechanischen Energiespeicher gespeicherte Energie ausgelöst und/oder unterstützt wird.

Aus dem Stand der Technik sind elektromechanische Antriebe zum Bewegen eines Flügels bekannt. Unter einem Flügel wird dabei insbesondere ein Tür- oder Fensterflügel verstanden. Derartige Flügel sind in den, den Flügel umgebenden Strukturelementen wie beispielsweise Zargen gelagert. Der Flügel stellt also den beweglichen Teil und das Strukturelement den feststehenden Teil dar. Mit dem Begriff der Zarge kann somit auch jedes andere den Flügel umgebende Strukturelement gemeint sein, insbesondere eine Gebäudewand.

Derartige elektromechanische Antriebe weisen häufig einen Elektromotor sowie eine mechanische Schließeinheit auf. Bei der mechanischen Schließeinheit kann es sich beispielsweise um eine Feder handeln, die beim Öffnen des Flügels bzw. beim Bewegen des Flügels in eine Öffnungsrichtung durch den Elektromotor gespannt wird. Zum Schließen des Flügels wird die in der Feder gespeicherte Energie verwendet. Während des Schließvorgangs kann der Elektromotor zum Abbremsen der Flügelbewegung verwendet werden.

Auch im Fehlerfall und insbesondere bei einem Stromausfall soll der Flügel zuverlässig abgebremst werden. Dies betrifft nicht nur den Schließvorgang, sondern im Fehlerfall auch den manuell ausgeführten Öffnungsvorgang, um ein unkontrolliertes Anschlagen in die Öffnungsendlage zu vermeiden.

Um im Fehlerfall den Elektromotor zum Abbremsen verwenden zu können ist es bekannt, Phasen des Elektromotors beispielsweise über Dioden kurzzuschließen. Dreht sich der Elektromotor mit kurzgeschlossener Phase, so wird eine Spannung induziert, wobei der über die Phase fließende Strom ein Bremsmoment bewirkt. Auf diese Weise kann der Elektromotor im Generatorbetrieb als Bremse verwendet werden. Aus der Druckschrift EP 2 267 881 A2 ist es bekannt, die generatorisch erzeugte Energie einem Bipolartransistor als Lastwiderstand zuzuführen. Aus der Druckschrift EP 3 245 732 B1 ist es bekannt, den Phasenkurzschluss derart pulsweitenmoduliert zu steuern, dass sich ein vorgegebener Stromfluss durch die Motorspulen und damit ein vorgegebenes Bremsmoment ergibt.

Zur Steuerung der Bremswirkung im Fehlerfall ist es erforderlich, elektrische Energie für den Betrieb der Steuerelektronik bereitzustellen. Dies kann beispielsweise durch geeignete Batterien erfolgen. Dabei muss jedoch stets überwacht werden, dass die Batterien eine ausreichende Ladung aufweisen, um den Betrieb der Steuerelektronik zu ermöglichen. Zudem kann auf diese Weise ein längerer Betrieb im Fehlerfall nicht sichergestellt werden, da die Batterien nur eine begrenzte Kapazität aufweisen.

Als Aufgabe der Erfindung wird es angesehen, die aus dem Stand der Technik bekannten elektromechanischen Antriebe so weiterzuentwickeln, dass ein sicherer Betrieb im Fehlerfall möglich ist.

Diese Aufgabe wird erfindungsgemäß dadurch gelöst, dass der elektromechanische Antrieb eine Notfallbremsvorrichtung aufweist, durch welche die Bewegung des Flügels in einem für Notfälle geeigneten Betriebszustand bremsbar ist, indem der Elektromotor als Generator betrieben wird, wobei durch die Bewegung des Flügels zwischen Phasenklemmen des als Generator betriebenen Elektromotors jeweils eine bewegungsabhängige Spannung anliegt, wobei die Phasenklemmen elektrisch leitend mit einem Bremsstromkreis der Notfallbremseinrichtung verbunden sind, wobei die Notfallbremseinrichtung eine Steuerenergieerzeugungseinrichtung aufweist, wobei die Steuerenergieerzeugungseinrichtung elektrische Energie für den Betrieb einer den Bremsstromkreis steuernden Steuereinrichtung der Notfallbremseinrichtung aus einem zwischen den Phasenklemmen fließenden elektrischen Strom erzeugt, wobei die Steuerenergieerzeugungseinrichtung elektrisch leitend mit der Steuereinrichtung verbunden ist, wobei der Bremsstromkreis eine Stromsteuereinrichtung aufweist, durch die ein Stromfluss durch den Bremsstromkreis und dadurch zwischen den Phasenklemmen anpassbar ist, und wobei die Steuereinrichtung elektrisch leitend mit der Stromsteuereinrichtung verbunden ist, um die von der Notfallbremseinrichtung auf den Flügel ausgeübte Bremswirkung vorzugeben. Die Notfallbremsvorrichtung ist dabei so ausgestaltet, dass insbesondere bei einem Stromausfall aus der durch die Bewegung des Flügels generatorisch erzeugten elektrischen Energie die Steuereinrichtung mit elektrischer Energie versorgt wird. Auf diese Weise kann die Steuereinrichtung bei einer Bewegung des Flügels die Stromsteuereinrichtung des Bremsstromkreises so ansteuern, dass eine gewünschte maximale Bremswirkung durch eine Anpassung des zwischen den Phasenklemmen des Elektromotors fließenden Stroms erreicht wird. Bewegt sich der Flügel nicht, liegt keine Spannung zwischen den Phasenklemmen an, so dass die Stromerzeugungseinrichtung keine elektrische Energie für den Betrieb der Steuereinrichtung bereitstellen kann und die Steuereinrichtung nicht betrieben werden kann. Da die Steuereinrichtung nur für den kontrollierten Bremsvorgang vorgesehen und erforderlich ist, ist dies jedoch kein Nachteil.

Erfindungsgemäß ist vorteilhafterweise vorgesehen, dass es sich bei dem Elektromotor um einen Drehstrom- oder Wechselstromelektromotor handelt, wobei der Bremsstromkreis eine Bremsgleichrichterschaltung aufweist, wobei die Bremsgleichrichterschaltung mit den Phasenklemmen des als Generator betriebenen Elektromotors elektrisch leitend verbunden ist. Im Generatorbetrieb erzeugt der Wechsel- oder Drehstromelektromotor eine ein- oder mehrphasige elektrische Wechselspannung zwischen den einander zugeordneten Phasenklemmen des Elektromotors. Durch die Gleichrichtung dieser gegebenenfalls mehrphasigen Wechselspannung durch die Bremsgleichrichterschaltung kann der über den Bremsstromkreis zwischen den Phasenklemmen fließende Brems- bzw. Kurzschlussstrom besonders einfach beispielsweise durch die erfindungsgemäße Verwendung eines MOSFETs im Bremsstromkreis angepasst werden.

Vorteilhafterweise ist erfindungsgemäß vorgesehen, dass die Steuerenergieerzeugungseinrichtung eine Steuergleichrichterschaltung aufweist, wobei die Steuergleichrichterschaltung mit den Phasenklemmen des als Generator betriebenen Elektromotors elektrisch leitend verbunden ist. Die elektrische Energie für den Betrieb der Steuereinrichtung kann besonders einfach direkt über die Steuergleichrichterschaltung aus der zwischen den Phasenklemmen anliegenden elektrischen Spannung erzeugt werden. Für den Betrieb der Steuereinrichtung ist eine elektrische Gleichspannung vorteilhaft, da hiermit herkömmliche elektronische Schaltungselemente wie beispielsweise Mikrocontroller betrieben werden können. Da durch die Steuergleichrichterschaltung die zwischen den Phasenklemmen anliegende Wechselspannung gleichgerichtet wird, kann die durch die Steuergleichrichterschaltung bereitgestellte elektrische Energie direkt weiteren elektronischen Schaltungskomponenten zur Verfügung gestellt werden. Bei Verwendung eines Gleichstrommotors ist die Steuergleichrichterschaltung so ausgestaltet, dass eine von einer Bewegungsrichtung des Flügels abhängige Spannungspolarität der bewegungsabhängigen Spannung zwischen den Phasenklemmen zum Betrieb der Steuereinrichtung gleichgerichtet wird.

Vorteilhafterweise ist erfindungsgemäß vorgesehen, dass die Steuergleichrichterschaltung und die Bremsgleichrichterschaltung parallel zueinander mit den Phasenklemmen elektrisch leitend verbunden sind. Durch die Verwendung der Bremsgleichrichterschaltung und der Steuergleichrichterschaltung können die jeweiligen Vorteile miteinander kombiniert werden. Bei der Ausgestaltung der Bremsgleichrichterschaltung und der Steuergleichrichterschaltung muss lediglich sichergestellt werden, dass in jedem Betriebszustand des Bremsstromkreises der Steuereinrichtung ausreichend elektrische Energie durch die Steuergleichrichterschaltung zur Verfügung gestellt werden kann.

Ein besonders einfacher Aufbau der Bremsgleichrichterschaltung oder der Steuergleichrichterschaltung kann dadurch erreicht werden, dass die Steuergleichrichterschaltung und/oder die Bremsgleichrichterschaltung als Brückengleichrichterschaltung ausgestaltet sind. Die Brückengleichrichterschaltung wird auch als Zweipuls-Brücken-Gleichrichterschaltung bezeichnet und weist zwei parallel geschaltete Diodenpaare auf. Die Phasenklemmen sind zwischen den Diodenpaaren mit der Brückengleichrichterschaltung elektrisch leitend verbunden.

Um zu erreichen, dass in jedem Betriebszustand des Bremsstromkreises der Steuereinrichtung ausreichend elektrische Energie durch die Steuergleichrichterschaltung zur Verfügung gestellt werden kann, ist erfindungsgemäß vorgesehen, dass ein Aufbau der Steuergleichrichterschaltung und ein Aufbau der Bremsgleichrichterschaltung gleich sind. "Gleich" bedeutet in diesem Zusammenhang, dass ein identischer Aufbau der Gleichrichterschaltungen mit Bauteilen gewählt wird, die eine zumindest sehr ähnliche Charakteristik aufweisen. Sofern Brückengleichrichterschaltungen verwendet werden, sollten die jeweils eingesetzten Dioden möglichst ähnliche Eigenschaften aufweisen.

Eine maximale Bremswirkung durch den Elektromotor wird erreicht, wenn der zwischen den Phasenklemmen fließende Bremsstrom durch die Stromsteuereinrichtung nicht begrenzt wird. Dies entspricht einem harten Phasenkurzschluss. Eine Ausgangsspannung über die Bremsgleichrichterschaltung beträgt in diesem Fall etwa 0V. Bei Verwendung von beispielsweise Brückengleichrichtern ist in diesem Fall ein Spannungsabfall über den Dioden der Bremsgleichrichterschaltung durch den hohen Bremsstrom relativ groß. Werden für die Steuergleichrichterschaltung Dioden mit einer ähnlichen Charakteristik wie für die Bremsgleichrichterschaltung verwendet, und ist der durch die Steuereinrichtung fließende Strom geringer als der durch die Bremsgleichrichterschaltung fließende Bremsstrom, so ist der Spannungsabfall über die Dioden der Steuergleichrichterschaltung ebenfalls geringer. Diese Spannungsdifferenz ist als Ausgangsspannung der Steuergleichrichterschaltung für die Steuereinrichtung nutzbar.

Alternativ oder in Ergänzung zur Verwendung einer Steuergleichrichterschaltung ist vorteilhafterweise vorgesehen, dass die Steuerenergieerzeugungseinrichtung ein Spannungsabfallelement aufweist, wobei das Spannungsabfallelement elektrisch leitend mit der Bremsgleichrichterschaltung und der Stromsteuereinrichtung verbunden ist, wobei die Steuereinrichtung parallel zu dem Spannungsabfallelement elektrisch leitend mit der Bremsgleichrichterschaltung und der Stromsteuereinrichtung verbunden ist. Bei dem Spannungsabfallelement kann es sich beispielsweise um ein Ohm'sches-Widerstandselement mit einem vorgegebenen elektrischen Widerstand handeln, dass in Reihe mit der Bremsgleichrichterschaltung und der Stromsteuereinrichtung geschaltet ist. Sobald Strom über die Stromsteuereinrichtung fließt, fällt über das Widerstandselement eine stromabhängige, definierte Spannung ab, die für die Versorgung der Steuereinrichtung verwendet werden kann.

Vorteilhafterweise ist erfindungsgemäß vorgesehen, dass die Steuerenergieerzeugungseinrichtung elektrisch leitend mit der Stromsteuereinrichtung in einer Parallelschaltung verbunden ist. Je nach Ausgestaltung der Stromsteuereinrichtung beinhaltet die Stromsteuereinrichtung bereits elektrische Elemente, über die ein Spannungsabfall erzeugt wird, der für den Betrieb der Steuereinrichtung genutzt werden kann. Beispielsweise kann in der Stromsteuereinrichtung vorteilhafterweise ein Strommesswiderstand vorgesehen sein, der zusätzlich auch als Spannungsabfallelement genutzt werden kann.

Um die Steuereinrichtung jederzeit mit ausreichender elektrischer Energie versorgen zu können und damit die Stromsteuereinrichtung ansteuern zu können, ist bei Verwendung eines Spannungsabfallelements vorteilhafterweise vorgesehen, dass die Stromsteuereinrichtung so ausgestaltet ist, dass ein Stromfluss über die Bremsgleichrichterschaltung und die Stromsteuereinrichtung bei einer Bewegung des Flügels jederzeit größer als ein Stromflussminimum ist. Dadurch fließt durch den Bremsstromkreis bei einer Bewegung des Flügels jederzeit ein elektrischer Strom durch den über das Spannungsabfallelement ausreichend Energie zum Betrieb der Steuereinrichtung bereitgestellt werden kann.

Vorteilhafterweise ist erfindungsgemäß vorgesehen, dass die Steuereinrichtung eine zentrale Steuereinheit aufweist. Bei der zentralen Steuereinheit handelt es sich vorteilhafterweise um eine elektronische und besonders vorteilhafterweise um eine digital-elektronische Datenverarbeitungseinrichtung. Erfindungsgemäß wird als zentrale Steuereinrichtung vorteilhafterweise ein Mikrocontroller verwendet. Mikrocontroller bieten elektrische Ein- und Ausgänge mit Digital-Analog- und Analog-Digital-Wandlern, PWM-Ausgänge und Komparator-Eingänge an, sodass mit einem Mikrocontroller gleichzeitig die erforderlichen Berechnungen durchgeführt, die elektrischen Signale für die Ansteuerung der Stromsteuereinrichtung erzeugt und Messignale verarbeitet werden können.

Vorteilhafterweise ist erfindungsgemäß vorgesehen, dass die Stromsteuereinrichtung einen Transistor, ein Strommesselement und ein Regelelement umfasst, wobei der Transistor über einen Kollektor und einen Emitter mit der Bremsgleichrichterschaltung elektrisch leitend verbunden ist, wobei durch das Strommesselement ein durch den Transistor fließender Strom gemessen wird, und wobei das Regelelement elektrisch leitend mit einer Basis des Transistors verbunden ist, um den Stromfluss durch den Transistor vorzugeben, wobei das Regelelement elektrisch leitend mit der zentralen Steuereinheit der Steuereinrichtung verbunden ist, wobei die Steuereinrichtung dem Regelelement einen Stromsollwert vorgibt, wobei das Regelelement elektrisch leitend mit dem Strommesselement verbunden ist, wobei das Regelelement einen Stromfluss so begrenzt, dass der Stromsollwert und der Strom übereinstimmen.

Bei dem Transistor handelt es sich vorteilhafterweise um ein MOSFET. Als Strommesselement kann vorteilhafterweise ein Shunt-Widerstand verwendet werden. Als Regelelement kann vorteilhafterweise ein Operationsverstärker verwendet werden. Durch den Operationsverstärker wird der durch den MOSFET und den Shunt-Widerstand fließende Stromwert mit einem von der Steuereinrichtung vorgegebenen Stromsollwert verglichen. Ist der fließende Strom zu groß, so wird die Gate-Spannung des MOSFETS durch den Operationsverstärker verringert, bis der Stromsollwert erreicht wird. Ist der fließende Strom zu klein, so wird die Gate-Spannung des MOSFETS durch den Operationsverstärker vergrößert, bis der Stromsollwert erreicht wird. Der MOSFET wird daher im Linearbetrieb verwendet. Durch diese Schaltung wird ein konstanter Laststrom zwischen den Phasenklemmen erzeugt, sofern der Elektromotor diesen liefern kann. Andernfalls wird der Laststrom durch den maximal von dem Elektromotor erzeugbaren Stromfluss begrenzt.

Vorteilhafterweise ist erfindungsgemäß vorgesehen, dass zwischen der zentralen Steuereinheit und dem Regelelement ein Pegelwandler angeordnet ist.

Insbesondere bei Verwendung einer Steuergleichrichterschaltung entfernt sich mit zunehmendem Bremsstrom ein niedriges Potential der Bremsgleichrichterschaltung von einem für die Steuerung verwendeten Referenzpotential. Die Spannungsdifferenz zwischen diesen Potentialen kann die Stromsteuereinrichtung beeinflussen, sodass ohne einen zusätzlichen Schaltungsteil der effektive und von der Steuereinrichtung vorgegebene Stromsollwert bremsstromabhängig wäre und eine Reglung nicht möglich wäre. Durch den Pegelwandler kann der durch die Steuereinrichtung erzeugte Stromsollwert bzw. die zur Steuerung verwendete Stellspannung in eine differenzielle Ausgangsspannung umgewandelt werden, sodass die Stellspannung des Regelelements unabhängig von dem Bremsstrom ist.

Vorteilhafterweise ist erfindungsgemäß vorgesehen, dass die Steuereinrichtung einen Überspannungsschutz aufweist, wobei der Überspannungsschutz unmittelbar elektrisch leitend mit der Steuerenergieerzeugungseinrichtung verbunden ist. Beispielsweise könnte bei Verwendung einer Steuergleichrichterschaltung bei ungebremstem Elektromotor eine Ausgangsspannung der Steuergleichrichterschaltung der Leerlaufspannung des Elektromotors entsprechen. Diese Ausgangsspannung könnte je nach Ausgestaltung des Elektromotors für den Betrieb der Steuereinrichtung zu groß sein und diese beschädigen. Ein Überspannungsschutz bietet die Möglichkeit, die durch die Steuerenergieerzeugungseinrichtung erzeugte Ausgangsspannung in einem für den Betrieb der Steuereinrichtung sicheren Bereich zu begrenzen.

Vorteilhafterweise ist erfindungsgemäß vorgesehen, dass die Steuereinrichtung einen Spannungsregler aufweist, wobei der Spannungsregler elektrisch leitend mit der Stromsteuereinrichtung verbunden ist und die Stromsteuereinrichtung mit elektrischer Energie versorgt und wobei der Spannungsregler mit weiteren Komponenten der Steuereinrichtung elektrisch leitend verbunden ist und diese mit elektrischer Energie versorgt. Die beispielsweise mit einer Steuergleichrichterschaltung erzeugte Ausgangsspannung ist in vielen Anwendungsfällen für den Betrieb der Steuereinrichtung zu klein. Durch die Verwendung des Spannungsreglers, der beispielsweise als Schaltregler ausgestaltet sein kann, kann aus der Ausgangsspannung eine für den Betrieb der Steuereinrichtung ausreichende Betriebsspannung erzeugt werden.

Um eine für den Betrieb der zentralen Steuereinheit ausreichend exakte Betriebsspannung zu erzeugen, ist erfindungsgemäß vorgesehen, dass die Steuereinrichtung einen Linearregler aufweist, wobei der Linearregler elektrisch leitend zwischen dem Spannungsregler und den weiteren Komponenten der Steuereinrichtung angeordnet ist.

Vorteilhafterweise ist erfindungsgemäß vorgesehen, dass die Steuereinrichtung eine Messeinrichtung zur Erfassung der Bewegungsgeschwindigkeit und der Bewegungsrichtung des Flügels aufweist. Die Messeinrichtung kann vorteilhafterweise Hall-Sensoren zur Erfassung von Drehbewegungsparametern des Elektromotors umfassen. Diese können vorteilhafterweise durch die zentrale Steuereinrichtung verarbeitet werden. Bei der Verwendung eines Mikrocontrollers als zentrale Steuerungseinrichtung können zu diesem Zweck die vorhandenen Eingänge des Mikrocontrollers verwendet werden.

Vorteilhafterweise ist erfindungsgemäß vorgesehen, dass es sich bei dem Elektromotor um einen Axialflussmotor oder einen Radialflussmotor handelt. Axial- oder Radialflussmaschinen eignen sich besonders gut für die Verwendung mit Tür- oder Fensterantrieben.

Bei einer besonders vorteilhaften Ausgestaltung des erfindungsgemäßen elektromechanischen Antriebs ist vorgesehen, dass der elektromechanische Antrieb aus dem Drehstrommotor und der Notfallbremsvorrichtung besteht, wobei die Notfallbremsvorrichtung aus der Steuerenergieerzeugungseinrichtung, der Steuereinrichtung und dem Bremsstromkreis besteht, wobei die Steuerenergieerzeugungseinrichtung aus der Steuergleichrichterschaltung besteht, wobei die Steuereinrichtung aus dem Regelelement, dem Pegelwandler, dem Überspannungsschutz, dem Spannungsregler, dem Linearregler, der Messeinrichtung und der zentralen Steuereinheit besteht, wobei der Bremsstromkreis aus der Stromsteuereinrichtung und dem Bremsgleichrichterschaltung besteht, und wobei die Stromsteuereinrichtung aus dem Transistor, dem Strommesselement und dem Regelelement besteht.

Weitere vorteilhafte Ausgestaltungen des erfindungsgemäßen elektromechanischen Antriebs werden anhand von in der Zeichnung dargestellten Ausführungsbeispielen näher erläutert.

Es zeigt:
Figur 1 eine schematisch dargestellte Schnittansicht eines elektromechanischen Antriebs mit einer Notfallbremsvorrichtung und
Figur 2 ein Schaltungsdiagramm der Notfallbremsvorrichtung.

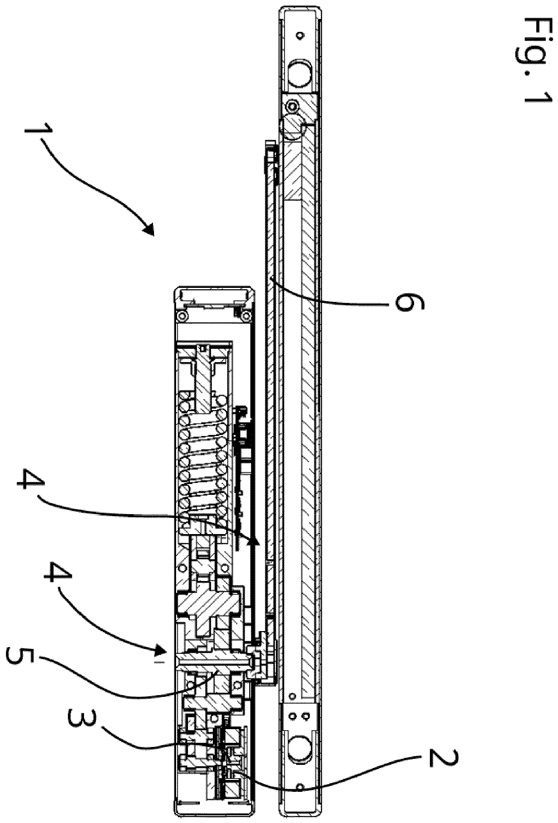

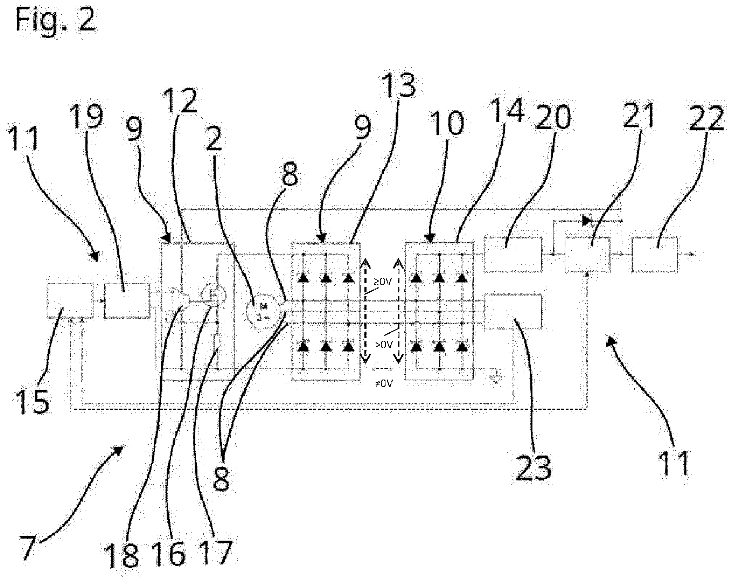

In Figur 1 ist schematisch eine Schnittansicht eines elektromechanischen Antriebs 1 zum Betätigen eines drehbar und/oder verschiebbar an einem Strukturelement gelagerten Flügels, insbesondere eines Türflügels oder eines Fensterflügels dargestellt. Der elektromechanische Antrieb 1 weist einen dreiphasigen Drehstrommotor 2 auf, der als Axialflussmaschine ausgestaltet ist. Eine Antriebswelle 3 des Drehstrommotors 2 steht über eine Kraftübertragungseinrichtung 4 mit dem nicht dargestellten Flügel in Wirkverbindung. Die Kraftübertragungsvorrichtung 4 besteht im Wesentlichen aus einem mit dem Drehstrommotor 2 verbundenen Getriebe 5 und einem Hebel 6. Hierüber wird eine Bewegung der Antriebswelle 3 im Motorbetrieb des Drehstrommotors 2 in eine Bewegung des Flügels umgesetzt. Eine Bewegung des Flügels im Generatorbetrieb des Drehstrommotor 2 bewirkt über die Kraftübertragungsvorrichtung 4 eine Bewegung der Antriebswelle 3. Der elektromechanische Antrieb 1 weist zudem eine in Figur 1 nicht erkennbare aber in Figur 2 im Detail dargestellte Notfallbremsvorrichtung 7 auf.

Durch die Notfallbremsvorrichtung 7 ist die Bewegung des Flügels in einem für Notfälle geeigneten Betriebszustand bremsbar, indem der Drehstrommotor 2 als Generator betrieben wird. Durch die Bewegung des Flügels liegt zwischen Phasenklemmen 8 des als Generator betriebenen Drehstrommotors 2 jeweils eine bewegungsabhängige Spannung an. Die Phasenklemmen 8 sind elektrisch leitend mit einem Bremsstromkreis 9 der Notfallbremseinrichtung 7 verbunden.

Die Notfallbremsvorrichtung 7 weist eine Steuerenergieerzeugungseinrichtung 10 auf. Die Steuerenergieerzeugungseinrichtung 10 erzeugt elektrische Energie für den Betrieb einer den Bremsstromkreis 9 steuernden Steuereinrichtung 11 der Notfallbremseinrichtung 7 aus einem zwischen den Phasenklemmen 8 fließenden elektrischen Strom. Die Steuerenergieerzeugungseinrichtung 10 ist elektrisch leitend mit der Steuereinrichtung 11 verbunden.

Der Bremsstromkreis 9 weist eine Stromsteuereinrichtung 12 auf, durch die ein Stromfluss durch den Bremsstromkreis 9 und dadurch zwischen den Phasenklemmen 8 anpassbar ist. Die Steuereinrichtung 11 ist elektrisch leitend mit der Stromsteuereinrichtung 12 verbunden, um die von der Notfallbremseinrichtung 7 auf den Flügel ausgeübte Bremswirkung vorzugeben. Der Bremsstromkreis 9 weist zudem eine als Brückengleichrichterschaltung ausgestaltete Bremsgleichrichterschaltung 13 auf. Die Bremsgleichrichterschaltung 13 ist mit den Phasenklemmen 8 des als Generator betriebenen Drehstrommotors 2 elektrisch leitend verbunden.

Die Steuerenergieerzeugungseinrichtung 10 weist eine ebenfalls als Brückengleichrichterschaltung ausgestaltete Steuergleichrichterschaltung 14 auf. Die Steuergleichrichterschaltung 14 ist ebenfalls mit den Phasenklemmen 8 des als Generator betriebenen Drehstrommotors 2 parallel zu der Bremsgleichrichterschaltung 13 elektrisch leitend verbunden.

Die Steuereinrichtung 11 weist eine zentrale Steuereinheit 15 auf. Bei der zentralen Steuereinheit 15 handelt es sich um einen Mikrocontroller.

Die Stromsteuereinrichtung 12 umfasst einen als MOSFET ausgestalteten Transistor 16, ein als Shunt-Widerstand ausgestaltetes Strommesselement 17 und ein als Operationsverstärker ausgestaltetes Regelelement 18. Der Transistor 16 ist über einen Kollektor und einen Emitter mit der Bremsgleichrichterschaltung 13 elektrisch leitend verbunden.

Das Regelelement 18 ist elektrisch leitend mit einer Basis des Transistors 16 verbunden, um den Stromfluss durch den Transistor 16 vorzugeben. Das Regelelement 18 ist zudem elektrisch leitend mit der zentralen Steuereinheit 15 der Steuereinrichtung 11 verbunden. Die Steuereinrichtung 11 gibt dem Regelelement 18 einen Stromsollwert vor.

Das Regelelement 18 ist zudem elektrisch leitend mit dem Strommesselement 17 verbunden. Durch das Strommesselement 17 wird ein durch den Transistor 16 fließender Strom gemessen. Das Regelelement 18 begrenzt einen Stromfluss zwischen den Phasenklemmen 8 so, dass der Stromsollwert und der Stromfluss übereinstimmen.

Zwischen der zentralen Steuereinheit 15 und dem Regelelement 18 ein Pegelwandler 19 angeordnet ist. Die Steuereinrichtung 11 weist zudem einen Überspannungsschutz 20 auf, der unmittelbar elektrisch leitend mit der Steuerenergieerzeugungseinrichtung 10 verbunden ist. Die Steuereinrichtung 13 weist auch einen Spannungsregler 21 und einen Linearregler 22 auf, die elektrisch leitend mit der Stromsteuereinrichtung 12 verbunden sind und die Stromsteuereinrichtung 12 mit elektrischer Energie versorgen. Zur Erfassung der Bewegungsgeschwindigkeit und der Bewegungsrichtung des Flügels weist die Steuereinrichtung 11 zudem eine Messeinrichtung 23 auf.

## Patentansprüche

1. Elektromechanischer Antrieb (1) zum Betätigen eines beweglich an einem Strukturelement gelagerten Flügels, insbesondere eines Türflügels oder eines Fensterflügels, wobei der elektromechanische Antrieb (1) einen Elektromotor (2) mit mindestens einer Phase aufweist, wobei ein Spannungsverlauf über diese Phase im Betrieb des Elektromotors (2) kontinuierlich ist, wobei eine Antriebswelle (3) des Elektromotors (2) über eine Kraftübertragungseinrichtung (4) mit dem Flügel in Wirkverbindung steht, wenn der elektromechanische Antrieb (1) bestimmungsgemäß an dem Flügel und/oder der Zarge montiert ist, so dass eine Bewegung der Antriebswelle (3) eine Bewegung des Flügels bewirkt, wobei der elektromechanische Antrieb (1) einen mechanischen Energiespeicher aufweist, welcher durch eine Öffnungsbewegung des Flügels aufgeladen und durch eine Schließbewegung des Flügels entladen wird, sodass die Schließbewegung durch die in dem mechanischen Energiespeicher gespeicherte Energie ausgelöst und/oder unterstützt wird, **dadurch gekennzeichnet, dass** der elektromechanische Antrieb (1) eine Notfallbremseinrichtung (7) aufweist, durch welche die Bewegung des Flügels in einem für Notfälle geeigneten Betriebszustand bremsbar ist, indem der Elektromotor (2) als Generator betrieben wird, wobei durch die Bewegung des Flügels zwischen Phasenklemmen (8) des als Generator betriebenen Elektromotors (2) jeweils eine bewegungsabhängige Spannung anliegt, wobei die Phasenklemmen (8) elektrisch leitend mit einem Bremsstromkreis (9) der Notfallbremseinrichtung (7) verbunden sind, wobei die Notfallbremsvorrichtung (7) eine Steuerenergieerzeugungseinrichtung (10) aufweist, wobei die Steuerenergieerzeugungseinrichtung (10) elektrische Energie für den Betrieb einer den Bremsstromkreis (9) steuernden Steuereinrichtung (11) der Notfallbremseinrichtung (7) aus einem zwischen den Phasenklemmen (8) fließenden elektrischen Strom erzeugt, wobei die Steuerenergieerzeugungseinrichtung (10) elektrisch leitend mit der Steuereinrichtung (11) verbunden ist, wobei der Bremsstromkreis (9) eine Stromsteuereinrichtung (12) aufweist, durch die ein Stromfluss durch den Bremsstromkreis (9) und dadurch zwischen den Phasenklemmen (8) anpassbar ist, und wobei die Steuereinrichtung (11) elektrisch leitend mit der Stromsteuereinrichtung (12) verbunden ist, um die von der Notfallbremseinrichtung (7) auf den Flügel ausgeübte Bremswirkung vorzugeben.

2. Elektromechanischer Antrieb (1) gemäß Anspruch 1, **dadurch gekennzeichnet, dass** es sich bei dem Elektromotor (2) um einen Drehstrom- oder Wechselstromelektromotor handelt, wobei der Bremsstromkreis (9) eine Bremsgleichrichterschaltung (13) aufweist, wobei die Bremsgleichrichterschaltung (13) mit den Phasenklemmen (8) des als Generator betriebenen Elektromotors (2) elektrisch leitend verbunden ist.

3. Elektromechanischer Antrieb (1) gemäß einem Anspruch 1 oder Anspruch 2, **dadurch gekennzeichnet, dass** die Steuerenergieerzeugungseinrichtung (10) eine Steuergleichrichterschaltung (14) aufweist, wobei die Steuergleichrichterschaltung (14) mit den Phasenklemmen (8) des als Generator betriebenen Elektromotors (2) elektrisch leitend verbunden ist.

4. Elektromechanischer Antrieb (1) gemäß Anspruch 2 und Anspruch 3, **dadurch gekennzeichnet, dass** die Steuergleichrichterschaltung (14) und die Bremsgleichrichterschaltung (13) parallel zueinander mit den Phasenklemmen (8) elektrisch leitend verbunden sind.

5. Elektromechanischer Antrieb (1) gemäß Anspruch 2 und einem der Ansprüche 3 oder 4, **dadurch gekennzeichnet, dass** die Steuergleichrichterschaltung (14) und/oder die Bremsgleichrichterschaltung (13) als Brückengleichrichterschaltung ausgestaltet sind.

6. Elektromechanischer Antrieb (1) gemäß Anspruch 2 und einem der Ansprüche 3 bis 5, **dadurch gekennzeichnet, dass** ein Aufbau der Steuergleichrichterschaltung (14) und ein Aufbau der Bremsgleichrichterschaltung (13) gleich sind.

7. Elektromechanischer Antrieb (1) gemäß einem der voranstehenden Ansprüche, **dadurch gekennzeichnet, dass** die Steuerenergieerzeugungseinrichtung (10) ein Spannungsabfallelement aufweist, wobei das Spannungsabfallelement elektrisch leitend mit der Bremsgleichrichterschaltung (13) und der Stromsteuereinrichtung (12) verbunden ist, wobei die Steuereinrichtung (11) parallel zu dem Spannungsabfallelement elektrisch leitend mit der Bremsgleichrichterschaltung (13) und der Stromsteuereinrichtung (12) verbunden ist.

8. Elektromechanischer Antrieb (1) gemäß Anspruch 7, **dadurch gekennzeichnet, dass** die Steuerenergieerzeugungseinrichtung (10) elektrisch leitend mit der Stromsteuereinrichtung (12) in einer Parallelschaltung verbunden ist.

9. Elektromechanischer Antrieb (1) gemäß Anspruch 7 oder Anspruch 8, **dadurch gekennzeichnet, dass** die Stromsteuereinrichtung (12) so ausgestaltet ist, dass ein Stromfluss über die Bremsgleichrichterschaltung (13) und die Stromsteuereinrichtung (12) bei einer Bewegung des Flügels jederzeit größer als ein Stromflussminimum ist.

10. Elektromechanischer Antrieb (1) gemäß einem der voranstehenden Ansprüche, **dadurch gekennzeichnet, dass** die Steuereinrichtung (11) eine zentrale Steuereinheit (15) aufweist.

11. Elektromechanischer Antrieb (1) gemäß einem der voranstehenden Ansprüche, **dadurch gekennzeichnet, dass** die Stromsteuereinrichtung (12) einen Transistor (16), ein Strommesselement (17) und ein Regelelement (18) umfasst, wobei der Transistor (16) über einen Kollektor und einen Emitter mit der Bremsgleichrichterschaltung (13) elektrisch leitend verbunden ist, wobei durch das Strommesselement (17) ein durch den Transistor (16) fließender Strom gemessen wird, und wobei das Regelelement (18) elektrisch leitend mit einer Basis des Transistors (16) verbunden ist, um den Stromfluss durch den Transistor (16) vorzugeben, wobei das Regelelement (18) elektrisch leitend mit der zentralen Steuereinheit (15) der Steuereinrichtung (11) verbunden ist, wobei die Steuereinrichtung (11) dem Regelelement (18) einen Stromsollwert vorgibt, wobei das Regelelement (18) elektrisch leitend mit dem Strommesselement (17) verbunden ist, wobei das Regelelement (18) einen Stromfluss so begrenzt, dass der Stromsollwert und der Strom übereinstimmen.

12. Elektromechanischer Antrieb (1) gemäß Anspruch 11, **dadurch gekennzeichnet, dass** zwischen der zentralen Steuereinheit (15) und dem Regelelement (18) ein Pegelwandler (19) angeordnet ist.

13. Elektromechanischer Antrieb (1) gemäß einem der voranstehenden Ansprüche, **dadurch gekennzeichnet, dass** die Steuereinrichtung (11) einen Überspannungsschutz (20) aufweist, wobei der Überspannungsschutz (20) unmittelbar elektrisch leitend mit der Steuerenergieerzeugungseinrichtung (10) verbunden ist.

14. Elektromechanischer Antrieb (1) gemäß einem der voranstehenden Ansprüche, **dadurch gekennzeichnet, dass** die Steuereinrichtung (11) einen Spannungsregler (21) aufweist, wobei der Spannungsregler (21) elektrisch leitend mit der Stromsteuereinrichtung (12) verbunden ist und die Stromsteuereinrichtung (12) mit elektrischer Energie versorgt und wobei der Spannungsregler (21) mit weiteren Komponenten der Steuereinrichtung (11) elektrisch leitend verbunden ist und diese mit elektrischer Energie versorgt.

15. Elektromechanischer Antrieb (1) gemäß Anspruch 14, **dadurch gekennzeichnet, dass** die Steuereinrichtung (11) einen Linearregler (22) aufweist, wobei der Linearregler (22) elektrisch leitend zwischen dem Spannungsregler (21) und den weiteren Komponenten der Steuereinrichtung (11) angeordnet ist.

16. Elektromechanischer Antrieb (1) gemäß einem der voranstehenden Ansprüche, **dadurch gekennzeichnet, dass** die Steuereinrichtung (11) eine Messeinrichtung (23) zur Erfassung der Bewegungsgeschwindigkeit und der Bewegungsrichtung des Flügels aufweist.
